# EUROPÄISCHE PATENTSCHRIFT

(11) **EP 0 446 598 B1**
(45) Veröffentlichungstag und Bekanntmachung des Hinweises auf die Patenterteilung: **25.08.1993**
(21) Anmeldenummer: 91101412.4
(22) Anmeldetag: 02.02.1991
(51) Int. Cl.: B60D 1/46

(54) **Anhängerkupplung, insbesondere für Zugmaschinen wie Schlepper o. dgl. mit heckseitiger Zapfwelle**
Towing coupling, in particular for tractor or similar vehicles with rear power take off
Attelage de remorquage, en particulier pour tracteur ou similaire avec prise de force arrière

(30) Priorität: 07.03.1990 DE 4007233
(43) Veröffentlichungstag der Anmeldung: 18.09.1991
(73) Patentinhaber: Cramer, Georg, D-45529 Hattingen (DE)
(72) Erfinder: Cramer, Georg, D-45529 Hattingen (DE)
(74) Vertreter: Honke, Manfred, Dr.-Ing.

(56) Entgegenhaltungen:
- EP-A- 0 016 317
- EP-A- 0 155 338
- EP-A- 0 179 422
- DE-A- 3 122 116

## Beschreibung

Die Erfindung betrifft eine Anhängerkupplung, insbesondere für Zugmaschinen wie Schlepper od. dgl., mit heckseitiger Zapfwelle, mit an die Zugmaschine angeschlossenen Führungswangen für einen zwischen den Führungswangen höhenverstellbaren Kupplungsträger mit Kupplungsmaul, wobei die Führungswangen in Reihe übereinander angeordnete Verriegelungsausnehmungen und der Kupplungsträger beidseitig fluchtende, in die Verriegelungsausnehmungen wahlweise eingreifende Verriegelungsbolzen aufweisen, welche mittels eines Hebelmechanismus' mit Betätigungsgriff gegen Druckfederwirkung aus ihrer Verriegelungsstellung in Entriegelungsstellung zurückdrückbar sind, wobei der Hebelmechanismus in der Ebene des Kupplungsträgers schwenkbar gelagerte Lenkhebel und in Bewegungsrichtung der Verriegelungsbolzen verlaufende Langlochführungen für Lenkzapfen aufweist, die einerseits mit den Verriegelungsbolzen verbunden und andererseits an den Lenkhebeln angelenkt sind.

Es ist eine derartige Anhängerkupplung bekannt, siehe z.B. EP-A-0 155 338, bei welcher der Hebelmechanismus zum Zurückdrücken der Verriegelungsbolzen aus ihrer Verriegelungsstellung in die Entriegelungsstellung als verhältnismäßig kompliziertes und raumaufwendiges Kniehebelsystem ausgeführt ist. Das Kniehebelsystem besteht in seinem wesentlichen Aufbau aus einer Drehscheibe mit Handgriff sowie an der Drehscheibe und den Verriegelungsbolzen angelenkten Kniehebeln. Raumaufwendig ist dieses bekannte Kniehebelsystem, weil es zwischen dem flachgehäuseartigen Kupplungsträger und der Zapfwelle am Heck der Zugmaschine angeordnet ist. Folglich liegen zwischen dem Kupplungszapfen und der bei Schleppern od. dgl. Zugmaschinen üblichen Zapfwelle nicht nur der Kupplungsträger, sondern außerdem das Kniehebelsystem. Um das Tiefenmaß des Kniehebelsystems verlängert sich zugleich der Abstand vom Kupplungspunkt zur Schlepperachse, so daß ein verhältnismäßig großes Kippmoment in Kauf genommen werden muß.

Die gleichen Nachteile treten bei einer anderen höhenverstellbaren Anhängerkupplung auf, bei welcher ebenfalls ein Kniehebelsystem vorgebaut ist, die Kniehebel jedoch gegen die Wirkung von Zugfedern mittels eines vertikal geführten Druckkolbens betätigt werden und außerdem unter Zwischenschaltung von Schwenkhebeln an die Verriegelungsbolzen angeschlossen sind.

Der Erfindung liegt die Aufgabe zugrunde, eine Anhägerkupplung, insbesondere für Zugmaschinen wie Schlepper od. dgl., der eingangs beschriebenen Art zu schaffen, bei welcher unter Verwirklichung einer besonders engen Bauweise und eines geringen Kippmomentes der Kupplungspunkt so nah wie möglich an der Zugmaschine bzw. deren Hinterachse liegt.

Zur Lösung dieser Aufgabe lehrt die Erfindung bei einer gattungsgemäßen Anhängerkupplung, daß der Hebelmechanismus zugmaschinenseitig unter Brückenbildung für die Zapfwelle an dem Betätigungsgriff angelenkte und auf dem Kupplungsträger schwenkbar gelagerte Lenkhebel aufweist und die Schwenklager für die Lenkhebel auf dem Kupplungsträger als ortsfeste Lager ausgebildet sind, wobei sich das eine Schwenklager für den einen Lenkhebel unterhalb und das andere Schwenklager für den anderen Lenkhebel oberhalb der jeweils zugeordneten Langlochführung befindet. - Die Erfindung geht von der Erkenntnis aus, daß sich die Zapfwelle dann bis unmittelbar an den Kupplungsträger heranführen läßt, wenn der Hebelmechanismus und der Betätigungsgriff zum Zurückdrücken der Verriegelungsbolzen aus der Verriegelungsstellung in die Entriegelungsstellung die Zapfwelle gleichsam umbauen. Das gelingt durch die brückenartige Lagerung des Betätigungsgriffes und der Lenkhebel. Dabei sind die Geometrie und das Bewegungsspiel der Lenkhebel so gewählt, daß die Betätigung der Verriegelungsbolzen über eine gleichsam hin- und hergehende Bewegung des Betätigungsgriffes erreicht wird. Der Hebelmechanismus ist auf praktisch zwei Lenkhebel reduziert, dadurch besonders einfach und funktionssicher. Von besonderer Bedeutung ist jedoch die Tatsache, daß durch die Umbauung der Zapfwelle ein um das Tiefenmaß des Hebelmechanismus' reduzierter Abstand vom Kupplungspunkt zur Zugmaschine bzw. deren Hinterachse erreicht wird. Folglich wird auch das Kippmoment um dieses Tiefenmaß reduziert. Tatsächlich ist nach Lehre der Erfindung der Hebelmechanismus zur Betätigung der Verriegelungsbolzen nicht länger zwischen dem Kupplungsträger und der Zapfwelle angeordnet, sondern umgibt praktisch die Zapfwelle.

Weitere erfindungswesentliche Merkmale sind im folgenden aufgeführt. Vorzugsweise weist der im Sinne einer Hin- und Herbewegung schwenkbar gelagerte Betätigungsgriff in vertikaler Projektion über dem Kupplungsträger eine Griffmulde zum Einlegen des Handrückens auf und ist dem Betätigungsgriff handflächenseitig ein ortsfester Griffbügel zugeordnet. Der ortsfeste Griffbügel erfüllt praktisch Abstützfunktion für die den Betätigungsgriff im Zuge des Zurückziehens der Verriegelungsbolzen aus ihrer Verriegelungsstellung bewegende Hand. Insoweit wird einerseits die Betätigung der Verriegelungsbolzen vereinfacht, wird andererseits zugleich ein Handschutz verwirklicht, so daß auch eine verletzungssichere Betätigung der erfindungsgemäßen Anhängerkupplung erfolgen kann. Das gilt auch für eine andere Ausführungsform, wonach der schwenkbar gelagerte Betätigungsgriff in vertikaler Projektion über dem Kupplungsträger einen flachringförmigen oder bügelförmigen Handgriff zum Einlegen der Hand aufweist. - Nach einem Vorschlag der Erfindung, dem selbständige Bedeutung zukommt, ist vorgesehen, daß der eine Lenkhebel unterhalb der Langlochführung eine zu seinem ortsfesten Schwenklager führende Abwinkelung aufweist und der andere Lenkhebel entsprechend schräggestellt ist, und daß beide ortsfesten Schwenklager im Bereich der Mitte unterhalb bzw. oberhalb der zugeordneten Langlochführung angeordnet sind, wobei sich die Lenkzapfen bei in Verriegelungsstellung befindlichen Verriegelungsbolzen am äußeren Ende der Langlochführung befinden. Dadurch bewegen sich die Lenkzapfen in den Langlochführungen aufeinander zu, wenn der Betätigungsgriff entgegen Druckfederwirkung bewegt wird. Läßt man den Betätigungsgriff los, sorgen die Druckfedern für sein Zurückschwenken in die Ausgangsstellung. Das Gleiche gilt für die Lenkzapfen in ihrer Außenstellung und folglich für die Verriegelungsbolzen in ihrer Verriegelungsstellung. Um eine einache Arretierung der Verriegelungsbolzen in ihrer Verriegelungsstellung zu erreichen, sieht die Erfindung vor, daß der Kupplungsträger auf seiner Außenseite eine dem einen Lenkhebel zugeordnete Gleitauflage mit Arretierungsstufe oder einen Arretierungsnocken mit Anlaufschräge aufweist, der von dem betreffenden Lenkhebel bei in Verriegelungsstellung befindlichem Verriegelungsbolzen hintergriffen und von dem elastisch gelagerten und/oder biegeelastisch ausgeführten Lenkhebel im Wege einer entsprechenden Abspreizung von dem Kupplungsträger überfahrbar ist. Der arretierte Lenkhebel muß also zum Ausrücken aus der Arretierungsstufe oder zum Überfahren des zugeordneten Arretierungsnockens von dem Kupplungsträger um Kupplungsdicke senkrecht zur Trägerebene fortgedrückt werden, um anschließend die zum Entriegeln der Verriegelungsbolzen erforderliche Lenkhebelbewegung in Trägerebene durchführen zu können. Dazu ist der betreffende Lenkhebel mit hinreichendem Bewegungsspiel oder elastisch gelagert oder selbst biegeelastisch ausgebildet. Zweckmäßigerweise besteht der betreffende Lenkhebel aus Federstahl oder ist als Federblatt ausgebildet. Dadurch rastet der betreffende Lenkhebel bei in Verriegelungsstellung befindlichen Verriegelungsbolzen hinter dem Arretierungsnocken bzw. in die Arretierungsstufe gleichsam ein. Stets ist die Anordnung des Betätigungsgriffes in vertikaler Projektion oberhalb des Kupplungsträgers so getroffen, daß der Betätigungsgriff nicht über den Kupplungszapfen in Richtung Zapfwelle vorkragt, gleichgültig, ob der Kupplungszapfen mit dem Kupplungsträger abschließt oder in Richtung Zapfwelle vorsteht.

Im folgenden wird die Erfindung anhand einer lediglich ein Ausführungsbeispiel darstellenden Zeichnung näher erläutert; es zeigen:

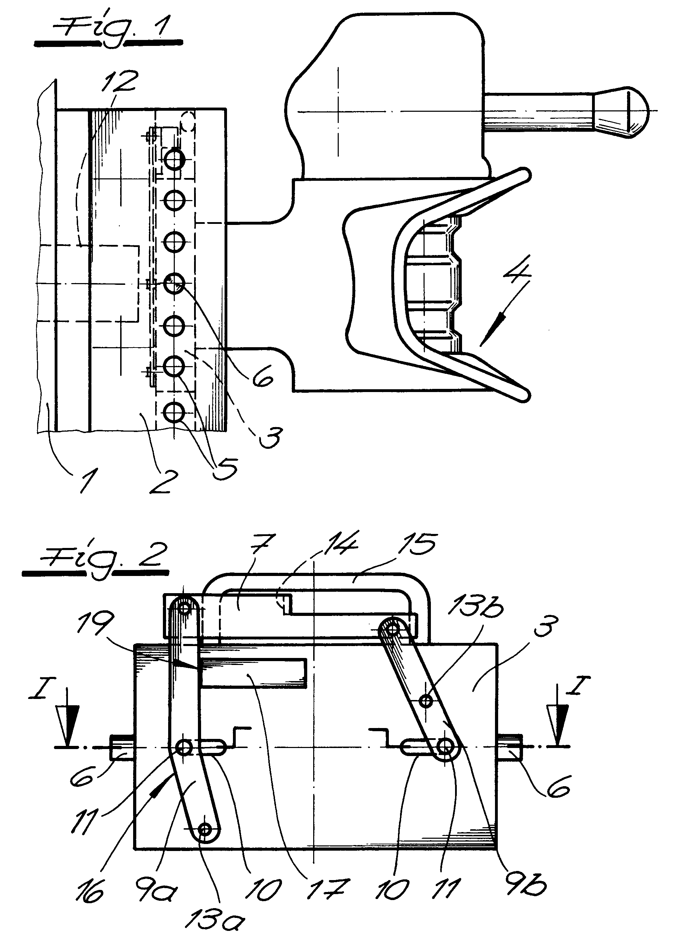

- Fig. 1: eine erfindungsgemäße Anhängerkupplung in schematischer Seitenansicht,
- Fig. 2: den Gegenstand nach Fig. 1 in zapfwellenseitiger Ansicht, bei in Verriegelungsstellung befindlichen Verriegelungsbolzen,

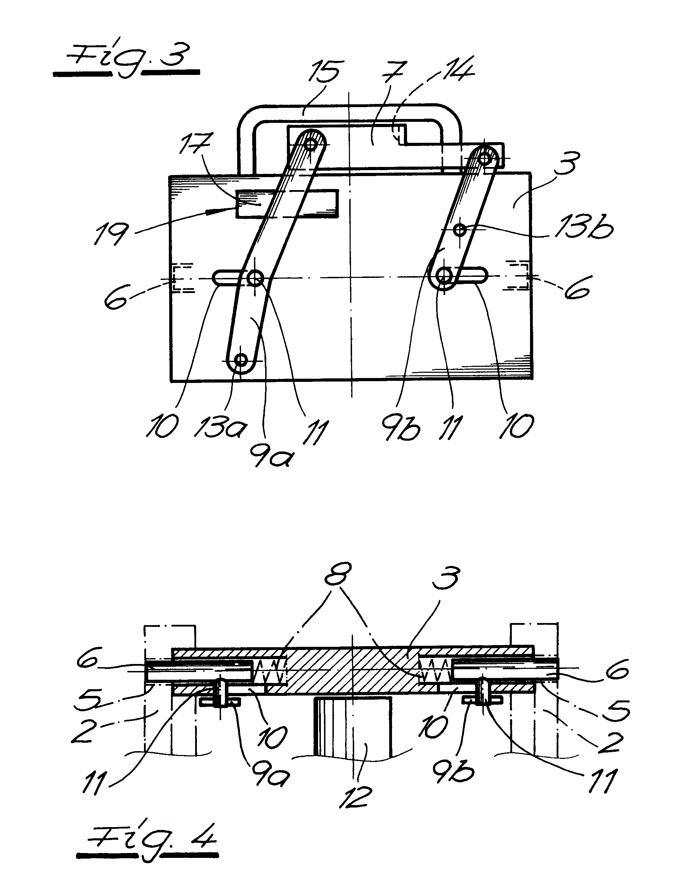

- Fig. 3: den Gegenstand nach Fig. 2 bei in Entriegelungsstellung befindlichen Verriegelungsbolzen,
- Fig. 4: einen teilweisen Horizontalschnitt gemäß der Linie I-I durch den Gegenstand nach Fig. 2,

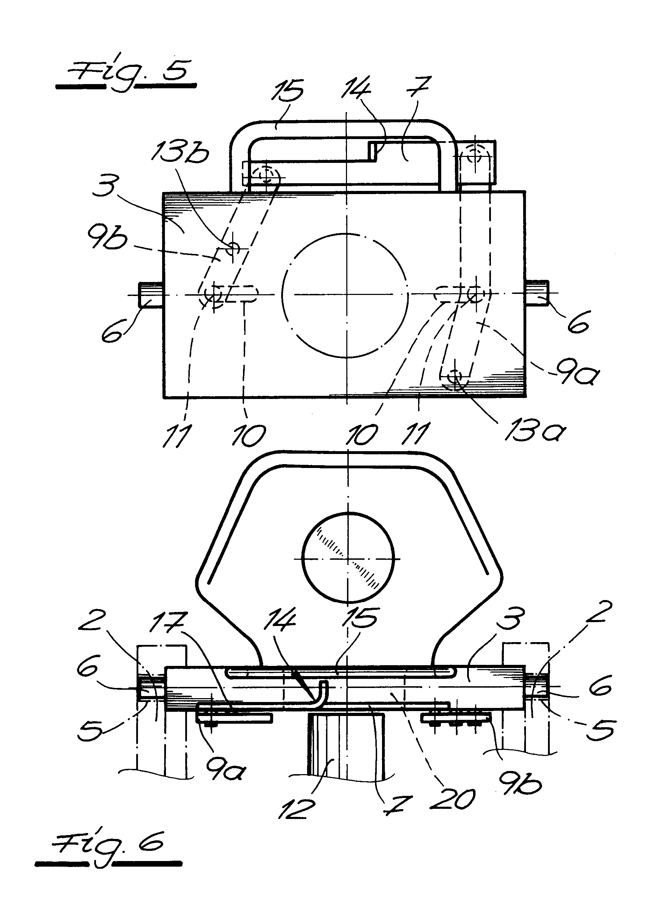

- Fig. 5: eine kupplungsseitige Ansicht auf den Gegenstand nach Fig. 2 bei entferntem Kupplungsmaul,

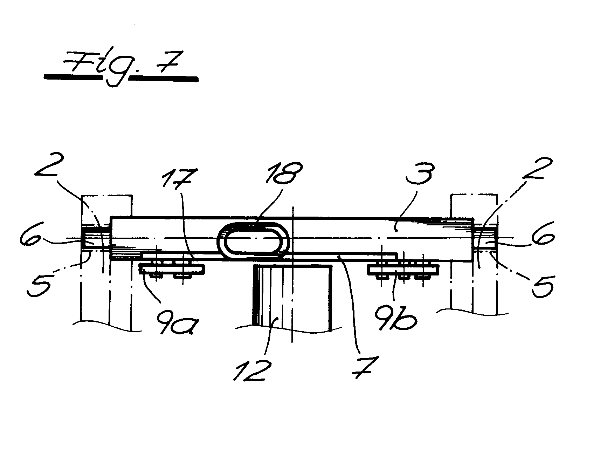

- Fig. 6: eine Aufsicht auf den Gegenstand nach Fig. 2 und
- Fig. 7: eine andere Ausführungsform des Gegenstandes nach Fig. 6.

In den Figuren ist eine Anhängerkupplung für Zugmaschinen und insbesondere Schlepper dargestellt, mit an die Zugmaschine 1 angeschlossenen Führungswangen 2 für einen zwischen den Führungswangen 2 höhenverstellbaren flachgehäuseartigen Kupplungsträger 3 mit Kupplungsmaul 4, wobei die Führungswangen 2 nach Art von Lochschienen in Reihe übereinander angeordnete Verriegelungsausnehmungen bzw. -bohrungen 5 und der Kupplungsträger 3 beidseitig fluchtende in die Verriegelungsausnehmungen 5 wahlweise eingreifende Verriegelungsbolzen 6 aufweisen. Diese Verriegelungsbolzen 6 sind mittels eines Hebelmechanismus' mit Betätigungsgriff 7 an dem Kupplungsträger 3 gegen die Wirkung von Druckfedern 8 aus Verriegelungsstellung in Entriegelungsstellung zurückdrückbar. Der Hebelmechanismus weist in der Ebene des Kupplungsträgers 3 schwenkbar gelagerte Lenkhebel 9a, 9b und in Bewegungsrichtung der Verriegelungsbolzen 6 verlaufende und fluchtende Langlochführungen 10 für Lenkzapfen 11 auf, die einerseits mit den Verriegelungsbolzen 6 verbunden und andererseits an den Lenkhebeln 9 angelenkt sind. Der Hebelmechanismus weist an dem Betätigungsgriff 7 angelenkte und auf dem Kupplungsträger 3 schwenkbar gelagerte Lenkhebel 9 auf, welche mit dem Betätigungsgriff 7 eine heckseitige Zapfwelle 12 der Zugmaschine 1 unter Brückenbildung übergreifen. Die Schwenklager 13a, 13b für die Lenkhebel 9a, 9b sind auf dem Kupplungsträger 3 als ortsfeste Lager ausgebildet, wobei sich das eine Schwenklager 13a für den einen Lenkhebel 9a unterhalb und das andere Schwenklager 13b für den anderen Lenkhebel 9b oberhalb der jeweils zugeordneten Langlochführung 10 befindet. Für die hin- und hergehende Schwenkbewegung der Lenkhebel 9a, 9b ist hinreichendes Bewegungsspiel vorhanden. Der schwenkbar gelagerte Betätigungsgriff 7 weist nach einer Ausführungsform eine Griffmulde 14 zum Einlegen des Handrückens auf. Dem Betätigungsgriff 7 ist handflächenseitig ein ortsfester Griffbügel 15 zugeordnet. Nach einer anderen Ausführungsform weist der schwenkbar gelagerte Betätigungsgriff 7 in vertikaler Projektion über dem Kupplungsträger 3 einen flachringförmigen oder bügelförmigen Handgriff 18 zum Einlegen der Hand auf. - Der eine Lenkhebel 9a weist unterhalb der Langlochführung 10 eine zu seinem ortsfesten Schwenklager 13a führende Abwinkelung 16 auf. Der andere Lenkhebel 9b ist entsprechend schräggestellt. Beide ortsfesten Schwenklager 13a, 13b sind im Bereich der Mitte unterhalb bzw. oberhalb der zugeordneten Langlochführungen 10 angeordnet, so daß ein leichtgängiges Verschwenken der Lenkhebel 9a, 9b möglich ist. Die Lenkzapfen 11 befinden sich bei in Verriegelungsstellung befindlichen Verriegelungsbolzen 6 am äußeren Ende der Langlochführungen 10, deren Länge selbstverständlich so gewählt ist, daß die Lenkzapfen 11 sich im Zuge des Entriegelungsvorganges so weit nach innen in den Langlochführungen 10 bewegen können, daß die Verriegelungsbolzen 6 schließlich vollständig aus den Verriegelungsausnehmungen 5 zurückgedrückt sind, wenn sie sich in Entriegelungsstellung befinden. Der Kupplungsträger 3 weist auf seiner Außenseite eine dem einen Lenkhebel 9a zugeordnete Gleitauflage 17 mit einer Arretierungsstufe 19 auf, in welche der Lenkhebel 9a bei in Verriegelungsstellung befindlichen Verriegelungsbolzen 6 selbständig einfällt und aus welcher der biegeelastisch ausgeführte Lenkhebel 9a im Wege einer entsprechenden Abspreizung von dem Kupplungsträger 3 ausrückbar ist. Dazu kann der eine Lenkhebel 9a aus Federstahl bestehen oder als Federblatt ausgebildet sein.

## Patentansprüche

1. Anhängerkupplung, insbesondere für Zugmaschinen wie Schlepper od. dgl., mit heckseitiger Zapfwelle, mit an die Zugmaschine angeschlossenen Führungswangen für einen zwischen den Führungswangen höhenverstellbaren Kupplungsträger mit Kupplungsmaul, wobei die Führungswangen in Reihe übereinander angeordnete Verriegelungsausnehmungen und der Kupplungsträger beidseitig fluchtende in die Verriegelungsausnehmungen wahlweise eingreifende Verriegelungsbolzen aufweisen, welche mittels eines Hebelmechanismus' mit Betätigungsgriff gegen Druckfederwirkung aus ihrer Verriegelungsstellung in Entriegelungsstellung zurückdrückbar sind, wobei der Hebelmechanismus in der Ebene des Kupplungsträgers schwenkbar gelagerte Lenkhebel und in Bewegungsrichtungs der Verriegelungsbolzen verlaufende Langlochführungen für Lenkzapfen aufweist, die einerseits mit den Verriegelungsbolzen verbunden und andererseits an den Lenkhebeln angelenkt sind, **dadurch gekennzeichnet**, daß der Hebelmechanismus zugmaschinenseitig unter Brückenbildung für die Zapfwelle (12) an dem Betätigungsgriff (7) angelenkte und auf dem Kupplungsträger (3) schwenkbar gelagerte Lenkhebel (9a, 9b) aufweist und die Schwenklager (13a, 13b) für die Lenkhebel (9a, 9b) auf dem Kupplungsträger (3) als ortsfeste Lager ausgebildet sind, wobei sich das eine Schwenklager (13a) für den einen Lenkhebel (9a) unterhalb und das andere Schwenklager (13b) für den anderen Lenkhebel (9b) oberhalb der jeweils zugeordneten Langlochführung (10) befindet.

2. Anhängerkupplung nach Anspruch 1, dadurch gekennzeichnet, daß der schwenkbar gelagerte Betätigungsgriff (7) in vertikaler Projektion über dem Kupplungsträger (3) eine Griffmulde (14) zum Einlegen des Handrückens aufweist und dem Betätigungsgriff (7) handflächenseitig ein ortsfester Griffbügel (15) zugeordnet ist.

3. Anhängerkupplung nach Anspruch 1, dadurch gekennzeichnet, daß der schenkbar gelagerte Betätigungsgriff (7) in vertikaler Projektion über dem Kupplungsträger (3) bzw. dem Lagerzapfen (20) des Kupplungsmauls (4) liegt und einen flachringförmigen oder bügelförmigen Handgriff (18) zum Einlegen der Hand aufweist.

4. Anhängerkupplung nach einem der Ansprüche 1 bis 3, dadurch gekennzeichnet, daß der eine Lenkhebel (9a) unterhalb der Langlochführung (10) eine zu seinem ortsfesten Schwenklager (13a) führende Abwinklung (16) aufweist und der andere Lenkhebel (9b) entsprechend schräggestellt ist, und daß beide ortsfesten Schwenklager (13, 13b) im Bereich der Mitte unterhalb bzw. oberhalb der zugeordneten Langlochführung (10) angeordnet sind, wobei sich die Lenkzapfen (11) bei in Verriegelungsstellung befindlichen Verriegelungsbolzen (6) am äußeren Ende der Langlochführungen (10) befinden.

5. Anhängerkupplung nach einem der Ansprüche 1 bis 4, dadurch gekennzeichnet, daß der Kupplungsträger (3) auf seiner Außenseite eine dem einen Lenkhebel (9a) zugeordnete Gleitauflage (17) mit Arretierungsstufe (19) oder einen Arretierungsnocken mit Anlaufschräge aufweist, der von dem Lenkhebel (9a) bei in Verriegelungsstellung befindlichen Verriegelungsbolzen (6) hintergriffen und von dem biegeelastisch oder federbelastet ausgeführten Lenkhebel (9a) im Wege einer entsprechenden Abspreizung von dem Kupplungsträger (3) überfahrbar ist.

6. Anhängerkupplung nach einem der Ansprüche 1 bis 5, dadurch gekennzeichnet, daß der eine Lenkhebel (9a) aus Federstahl besteht oder als Federblatt ausgebildet ist.

## Claims

1. A trailer coupling, particularly for traction vehicles such as tractors or the like with a rear end power take-off shaft, with guide cheeks attached to the traction vehicle for a coupling support with a coupling aperture, the height of which coupling support can be adjusted between the guide cheeks, wherein the coupling cheeks have locking recesses disposed in a row one above another and the coupling support has locking pins aligned on both sides and engaging in the locking recesses according to choice, which locking pins can be pushed back against the action of a compression spring by means of a lever mechanism with an operating handle from their locked position into an unlocked position, wherein the lever mechanism has a guide rod pivotally mounted in the plane of the coupling support and slotted guides for guide pivots extending in the direction of movement of the locking pins, which guide pivots are attached to the locking pins on one side and are linked to the guide rods on the other side, characterised in that the lever mechanism has guide rods (9a, 9b) which are pivotally mounted on the coupling support (3) and which are articulated to the operating handle (7) on the traction vehicle side with the formation of a bridge for the power take-off shaft (12), and the pivotal bearings (13a, 13b) for the guide rods (9a, 9b) on the coupling support (3) are constructed as fixed bearings, wherein the pivotal bearing (13a) for one guide rod (9a) is located below and the pivotal bearing (13b) for the other guide rod (9b) is located above the respective associated slotted guide (10).

2. A trailer coupling according to claim 1, characterised in that in vertical projection the pivotally mounted operating handle (7) has a recessed grip (14) above the coupling support (3) for inserting the back of the hand, and a fixed handle stirrup (15) is associated with the operating handle (7) on the side of the palm of the hand.

3. A trailer coupling according to claim 1, characterised in that in vertical projection the pivotally mounted operating handle (7) is situated above the coupling support (3) or the bearing journal (20) of the coupling aperture (4) and has a handle (18) in the form of a flat ring or a stirrup for inserting the hand.

4. A trailer coupling according to any one of claims 1 to 3, characterised in that one guide rod (9a) has a bent section (16) below the slotted guide (10) leading to its fixed pivotal bearing (13a) and the other guide rod (9b) is inclined correspondingly, and that both fixed pivotal bearings (13a, 13b) are disposed in the central region above or below the associated slotted guide (10), wherein the guide pivots (11) are situated at the outer ends of the slotted guides (10) when the locking pins (6) are in the locked position.

5. A trailer coupling according to any one of claims 1 to 4, characterised in that the coupling support (3) has a sliding support (17) with a locking stage (19) or a locking cam with check slants associated with one guide rod (9a) on its outside, which is engaged from behind by the guide rod (9a) when the locking pins (6) are in the locked position and which can be crossed by the guide rod (9a), which is constructed so that it can bend elastically or so that it is spring-loaded, in the course of a corresponding spreading movement away from the coupling support (3).

6. A trailer coupling according to any one of claims 1 to 5, characterised in that one guide rod (9a) consists of spring steel or is constructed as a spring leaf.

## Revendications

1. Attelage de remorque, en particulier pour des machines de traction telles que des tracteurs ou autres, avec un arbre de prise de force à l'arrière, avec des flasques de guidage raccordés au tracteur pour un support d'attelage avec une embouchure d'attelage réglable en hauteur entre les flasques de guidage, lesquels présentent des évidements ou trous de verrouillage disposés en rang l'un au-dessus de l'autre, tandis que le support d'attelage présente des goujons de verrouillage alignés de part et d'autre et s'engageant sélectivement dans les trous des flasques en pouvant être rétractés à partir de leur position de verrouillage pour venir dans leur position de déverrouillage au moyen d'un mécanisme à leviers avec une poignée de manoeuvre agissant contre l'action d'un ressort de pression, le mécanisme à leviers présentant dans le plan du support d'attelage des leviers mobiles montés pivotants et des guidages à trou allongé s'étendant dans le sens du mouvement des goujons de verrouillage pour des tenons de guidage qui sont, d'une part, reliés aux goujons de verrouillage et sont, d'autre part, articulés sur les leviers mobiles,
**caractérisé** en ce que le mécanisme à leviers présente, du côté du tracteur, en formant un pont pour l'arbre de prise de force (12), des leviers mobiles (9a,9b) articulés sur la poignée de manoeuvre (7) et montés pivotants sur le support d'attelage (3) et les pivots (13a, 13b) des leviers mobiles (9a, 9b) sont sous la forme de pivots fixes sur le support d'attelage (3), le pivot (13a) du levier mobile (9a) se trouvant en dessous et le pivot (13b) de l'autre levier mobile (9b) se trouvant au dessus du guidage à trou allongé (10) respectivement associé.

2. Attelage de remorque selon la revendication 1, caractérisé en ce que la poignée de manoeuvre (7) montée pivotante présente en projection verticale au-dessus du support d'attelage (3) une dépression de préhension (14) pour l'application du dos de la main et un arceau de poignée fixe (15) est associé à la poignée de manoeuvre (7) sur son côté correspondant à la paume de la main.

3. Attelage de remorque selon la revendication 1, caractérisé en ce que la poignée de manoeuvre (7) montée pivotante se trouve en projection verticale au-dessus du support d'attelage (3) et/ou du tourillon de palier (20) de l'embouchure d'attelage (4) et présente une poignée (18) en forme d'anneau plat ou d'arceau pour poser la main.

4. Attelage de remorque selon une des revendications 1 à 3, caractérisé en ce que un des leviers (9a) présente en dessous du guidage (10) à trou allongé une partie coudée (16) allant à son pivot fixe (13a) et l'autre levier (9b) est disposé obliquement de manière correspondante, et en ce que les deux pivots fixes (13a, 13b) sont disposés dans la région du milieu respectivement en dessous et au-dessus du guidage (10) à trou allongé associé, les tenons de guidage (11) se trouvant, quand le goujons de verrouillage (6) sont en position de verroullage, à l'extrémité extérieure des guidages (10) à trou allongé.

5. Attelage de remorque selon une des revendications 1 à 4, caractérisé en ce que le support d'attelage (3) présente sur son côté extérieur une surface de glissement (17) associée à un (9a) des leviers mobiles, avec un cran d'arrêt (19) ou une came de blocage avec une rampe d'engagement oblique, derrière lequel ou laquelle s'engage le levier (9a) quand les goujons de verrouillage (6) sont en position de verrouillage, et qui peut être franchi(e) par le levier (9a) élastique en flexion ou taré par un ressort, en écartant ce levier du support d'attelage (3) sur une distance correspondante.

6. Attelage de remorque selon une des revendications 1 à 5, caractérisé en ce qu'un (9a) des leviers mobiles est en acier à ressort ou est sous la forme d'une lame de ressort.
